# NEUE EUROPÄISCHE PATENTSCHRIFT

(11) **EP 1 114 371 B2**
(45) Veröffentlichungstag und Bekanntmachung des Hinweises auf die Entscheidung über den Einspruch: **31.10.2018**
(45) Hinweis auf die Patenterteilung: 23.04.2003
(21) Anmeldenummer: 99936396.3
(22) Anmeldetag: 02.06.1999
(51) Int. Cl.: G06F 15/00

(54) **VERFAHREN UND VORRICHTUNG ZUR VERKEHRSZEICHENERKENNUNG UND NAVIGATION**
METHOD AND DEVICE FOR TRAFFIC SIGN RECOGNITION AND NAVIGATION
PROCÉDÉ ET DISPOSITIF POUR LA RECONNAISSANCE DE SIGNAUX ROUTIERS ET LA NAVIGATION

(30) Priorität: 15.09.1998 DE 19842176
(43) Veröffentlichungstag der Anmeldung: 11.07.2001
(73) Patentinhaber: ROBERT BOSCH GMBH, 70442 Stuttgart (DE)
(72) Erfinder: JANSSEN, Holger, D-31787 Hameln (DE)
(86) Internationale Anmeldenummer: PCT/DE1999/001628
(87) Internationale Veröffentlichungsnummer: WO 2000/016214

(56) Entgegenhaltungen:
- EP-A- 0 582 257
- EP-A1- 0 782 118
- US-A- 5 296 852
- US-A- 5 374 932
- US-A- 5 739 848

## Beschreibung

### Stand der Technik

Die Erfindung geht aus von einer Verkehrszeichenerkennungseinrichtung bzw. einem Verfahren zur Erkennung von Verkehrszeichen nach der Gattung der unabhängigen Ansprüche. Aus der DE 40 23 952 C2 ist schon eine Verkehrszeichenerkennungseinrichtung bekannt, bei der ein Bildverarbeitungsverfahren zur Verkehrszeichenerkennung eingesetzt wird.

### Vorteile der Erfindung

Das erfindungsgemäße Verfahren bzw. die erfindungsgemäße Vorrichtung mit den kennzeichnenden Merkmalen der unabhängigen Ansprüche haben demgegenüber den Vorteil, daß durch die Kopplung einer Verkehrszeichenerkennungseinrichtung mit einer Navigationseinrichtung Informationen zwischen beiden Systemen ausgetauscht werden können, wodurch sich die von beiden Systemen ermittelten Daten ergänzen können, was wiederum zur Erhöhung der Sicherheit und Zuverlässigkeit jedes der miteinander gekoppelten Systeme beiträgt. Dies ist von Bedeutung, wenn über das gekoppelte System Eingriffe in die Geschwindigkeitssteuerung des Fahrzeugs oder ähnliches vorgenommen werden sollen; fehlerhaft erkannte oder nicht erkannte Verkehrszeichen würden dabei erhebliche Gefahren für Fahrer und Fahrzeug bedeuten.

Durch die in den abhängigen Ansprüchen aufgeführten Maßnahmen sind vorteilhafte Weiterbildungen und Verbesserungen des/der in den unabhängigen Ansprüchen angegebenen Verfahrens/Vorrichtung möglich.

### Zeichnung

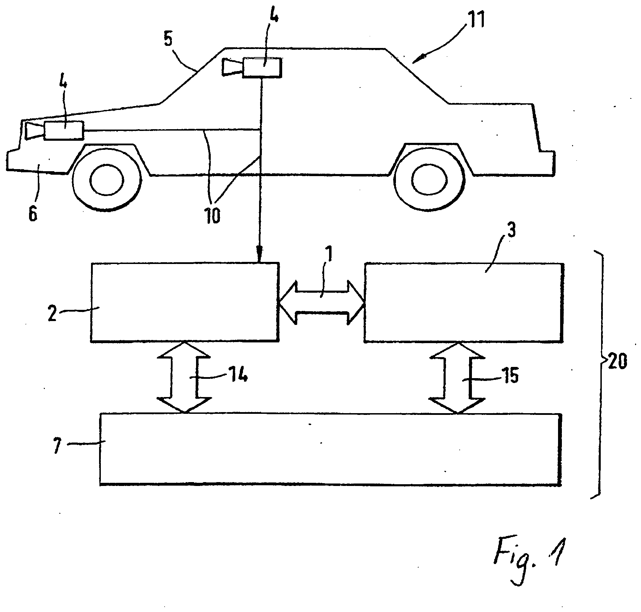

Ein Ausführungsbeispiel der Erfindung ist in der Figur 1 dargestellt und in der nachfolgenden Beschreibung näher erläutert.

### Beschreibung des Ausführungsbeispiels

Die Figur 1 zeigt ein gekoppeltes System 20 zur Verkehrszeichenerkennung und Navigation, das beispielsweise in einem Kraftfahrzeug 11 eingebaut werden kann. Das gekoppelte System 20 enthält eine Einrichtung 2 zur Verkehrszeichenerkennung, die über Datenaustauschleitungen 1 mit einer Einrichtung 3 zur Navigation gekoppelt ist. Die Einrichtung 2 zur Verkehrszeichenerkennung ist über Sensorleitungen 10 mit Fahrzeugumfeldsensoren 4 verbunden. Die Fahrzeugumfeldsensoren, beispielsweise Kameras, sind beispielsweise im Bereich der Windschutzscheibe 5 oder im Frontbereich 6 nahe der Frontscheinwerfer beziehungsweise der Stoßstange befestigt. Die Einrichtungen 2 und 3 sind über weitere Datenleitungen 14 und 15 mit einer Auswerteeinheit 7 verbunden.

Die Einrichtung 2 dient zur Verkehrszeichenerkennung, insbesondere zum Bereitstellen von Verkehrszeichenerkennungsdaten. Die Einrichtung 3 zur Navigation dient zur Bereitstellung von Navigationsdaten, beispielsweise über in einem Speicher abgelegte digitale Straßenkarten; diese Navigatonsdaten umfassen beispielsweise Position und aktuelle Straßenform. Über die Datenaustauschleitungen 1 kann die Einrichtung zur Navigation Daten an die Verkehrszeichenerkennungseinrichtung 2 übermitteln, um die Verkehrszeichenerkennungsdaten zu ergänzen. Beispiele für von der Navigationseinrichtung übermittelte Daten sind:
1. Meldung der aktuellen Straßenform, zum Beispiel Ortschaft, Landstraße, Autobahn, Feldweg, usw; darin können Kontextinformationen enthalten sein, die zum Beispiel die maximal erlaubte Fahrzeuggeschwindigkeit für eine Straßenform angeben.
2. Meldung des Wechsels des Fahrzeugs auf eine neue Straßenform oder das Abbiegen auf eine neue Straße, zum Beispiel der Wechsel von Landstraße zur Bundesstraße o. ä., durch diesen Wechsel wird nämlich die Gültigkeit bestimmter Verkehrszeichen, zum Beispiel Geschwindigkeitsbeschränkungen, aufgehoben.
3. Meldung von Ortsein- und -ausgängen. Die Geschwindigkeitsbeschränkungen werden innerorts in der Regel strenger vom Gesetzgeber gehandhabt als außerorts. Dies kann bei Meldungen des Verkehrszeichenerkennungsystems an den Fahrer berücksichtigt werden.
4. Übermittlung von parallel zur eigenen Straße verlaufenden Straßen. Dadurch kann die Gültigkeit der Verkehrszeichen, die neben einer parallel verlaufenden Straße aufgestellt sind, von der eigenen Straße durch die Einrichtung zur Verkehrszeichenerkennung ausgeblendet werden. Durch die Kopplung zwischen Verkehrszeichenerkennung und Navigationsystem kann die Relevanz der durch die Einrichtung zur Verkehrszeichenerkennung erkannten Verkehrszeichen bewertet werden. Dadurch wird die Qualität und Güte einer Verkehrszeichenerkennung erhöht. Vorgesehen ist auch eine umgekehrte Informationsflußrichtung, bei der die Einrichtung zur Verkehrszeichenerkennung Informationen an die Einrichtung 3 zur Navigation über die Datenaustauschleitungen 1 übermittelt. Beispielhaft sei die Erkennung des Gefahrenzeichens "Baustelle" genannt, bei der sich die Straßenführung durch die Baustelle geändert haben kann und der Straßenverlauf nicht mehr mit den Daten der digitalen Karte des Navigationssystems übereinstimmt. Die Navigationseinrichtung 3 enthält insbesondere einen Kartenspeicher zur Abspeicherung insbesondere digitaler Kartendaten, sowie Vergleichsmittel zum Vergleich der Verkehrszeichenerkennungsdaten, die von der Einrichtung zur Verkehrszeichenerkennung übertragen werden, mit den Kartendaten. Dadurch ist bei Abweichungen ein Warnhinweis an den Fahrzeugführer erstellbar. In jedem Fall kann das Wissen über die Baustelle bei Meldungen des Navigationssystems an den Fahrer berücksichtigt werden. Umgekehrt kann die Einrichtung zur Verkehrszeichenerkennung einen Datenpuffer aufweisen zur Zwischenspeicherung von von der Navigationseinrichtung übermittelten Daten. Diese Daten umfassen beispielsweise die aktuelle Straßenform, die Anzahl der Fahrspuren, die Breite der Fahrbahn, das Verlassen oder das Eintreten in eine Ortschaft, Gefahren wie zum Beispiel eine scharfe Kurve in großer Entfernung, implizite Aufhebung der Gültigkeit von Verkehrszeichen infolge Straßenwechsels, Existenz zur aktuellen Straße benachbarter Straßen, Auf- und Abbiegespuren, Beschleunigungsstreifen, Kreuzen der Fahrbahnen, Kreuzungen, Brücken sowie Fuß- und Fahrradwege. Bei Erkennung von Abweichungen über das Vergleichsmittel, das beispielsweise in der Einrichtung zur Navigation 3 angeordnet ist, können auch in der digitalen Straßenkarte erkannte Fehler in einem geeigneten Datenträger gespeichert werden, um bei folgenden Befahrungen der fehlerhaften Stelle den neuen Straßenverlauf zur Verfügung zu haben. Zum neuen Straßenverlauf gehört beispielsweise das Vorhandensein einer neuen Baustelle beziehungsweise das Vorhandensein eines geänderten Verkehrszeichens. Die Auswerteeinheit 7 dient zur Bereitstellung von Fahrerinformationen aus den Navigationsdaten und den Verkehrszeichenerkennungsdaten. Bei Meldungen von Informationen des Navigationssystems an den Fahrer werden Informationen der Verkehrszeichenerkennungseinrichtung mit berücksichtigt und/oder die Datenbasis des Navigationssystems korrigiert und/oder ergänzt, wie schon oben erwähnt. Die Auswerteeinheit 7 kann aus dem gekoppelten System von Verkehrszeichenerkennungssystem und Navigationssystem wahlweise auch Steuersignale generieren zum Eingriff in eine Fahrzeugsteuerung. Steuersignale sind hierbei beispielsweise Signale für eine elektronische Fahrzeugbremse, ein elektronisches Gaspedal und/oder für eine Lenkwinkelsteuerung und/oder für eine Tempomatansteuerung. Die Auswerteeinheit ermittelt aus den Verkehrszeichenerkennungsdaten und den Navigationsdaten eine aktuell gültige Geschwindigkeitsbeschränkung. Die Auswerteeinheit ist entweder ein separates Bauteil des gekoppelten Systems 20 oder aber Bestandteil der Einrichtungen 2 und/oder 3. Einrichtung 2, Einrichtung 3 und Einrichtung 7 können auch total in einer Einheit integriert sein.

Die Einrichtung zur Verkehrszeichenerkennung kann beispielsweise auf einem videobasierten Prinzip beruhen, wie in der DE 40 23 052 C2 beschrieben. Ebenfalls einsetzbar bei den erfindungsgemäßen Vorrichtungen sind Einrichtungen 2, die auf einem funkbasierten Verfahren oder auf einem Laserscanprinzip beruhen. Bei funkbasierten Verfahren werden Verkehrszeichen vorausgesetzt, in die ein verkehrszeichenspezifischer Sender eingebaut ist, der von der Verkehrszeichenerkennungseinrichtung des Fahrzeugs empfangbare Signale aussendet. In allen Fällen kann die Information erkannter Verkehrszeichen in geeigneter Weise dem Fahrer mitgeteilt werden, beispielsweise akustisch oder auch optisch durch Warnsignale. Die Einrichtung 3 zur Navigation zur Fahrer beziehungsweise Fahrzeugführung enthält beispielsweise einen Speicher, in dem in digitalen Karten die Lage der Straßen und weitere Informationen abgespeichert sind. Die Feststellung der Position des Fahrzeugs innerhalb dieser digitalen Karte wird üblicherweise durch ein satellitenbasiertes Ortungsverfahren (GPS, Global Positionen System) erreicht, wobei ein dieses Verfahren nutzende GPS-Modul in die Einrichtung 3 zur Navigation integriert ist.

## Patentansprüche

1. Verfahren zur Erkennung von Verkehrszeichen in der Umgebung eines Fahrzeugs und zur Navigation des Fahrzeugs, bei dem
• bei einem Erkennen von Verkehrszeichen Verkehrszeichenerkennungsdaten erstellt werden,
• wobei Navigationsdaten zur Lokalisierung des Fahrzeugs, insbesondere über ein satellitenbasiertes Ortungsverfahren, bereitgestellt werden,
• wobei im Fahrzeug
∘ die Navigationsdaten zur
▪ Aktualisierung und/oder
▪ Ergänzung
mit den Verkehrszeichenerkennungsdaten aufbereitet werden und/oder
∘ die Verkehrszeichenerkennungsdaten zu ihrer Ergänzung mit den Navigationsdaten aufbereitet werden,
• wobei die Verkehrszeichenerkennungsdaten mit den Navigationsdaten verglichen werden und
• bei einer Abweichung
∘ ein Warnhinwels an den Fahrzeugführer ausgegeben wird und/oder
∘ die Navigationsdaten beziehungsweise die Verkehrszeichenerkennungsdaten aktualisiert werden, wobei aus den Verkehrszeichenerkennungsdaten und den Navigationsdaten eine aktuell gültige Geschwindigkeitsbeschränkung ermittelt wird,
• wobei für die Verkehrszeichenerkennung ein videobasiertes Prinzip, ein Laserscanprinzip oder ein funkbasiertes verfahren verwendet wird, wenn in den Verkehrszeichen verkehrszeichenspezifische Sender eingebaut sind, die von der Verkehrszeichenerkennungseinrichtung des Fahrzeugs empfangbar sind.

2. Verfahren nach Anspruch 1, **dadurch gekennzeichnet, dass** die Navigationsdaten ergänzende Daten wie beispielsweise die aktuelle Straßenform, die Anzahl der Fahrspuren, die Breite der Fahrbahn, das Verlassen oder das Eintreten in eine Ortschaft, Gefahrenmeldungen wie zum Beispiel eine scharfe Kurve in großer Entfernung, eine implizite Aufhebung der Gültigkeit von Verkehrszeichen infolge Straßenwechsels, die Existenz von zur aktuellen Straße benachbarten Straßen, Auf- und Abbiegespuren, Beschleunigungsstreifen, kreuzender Fahrbahnen, Kreuzungen, Brücken sowie Fuß- und Fahrradwege umfassen, dass die Verkehrszeichenerkennungsdaten unter Verwendung der ergänzenden Daten aufbereitet werden, so dass erkannte Verkehrszeichen lediglich im Rahmen der aktuellen Verkehrssituation an den Fahrzeugführer gemeldet werden.

3. Verfahren nach einem der vorhergehenden Ansprüche, **dadurch gekennzeichnet, dass** aus den Navigationsdaten und/oder den Verkehrszeichenerkennungsdaten Steuersignale zum Eingriff in eine Fahrzeugsteuerung generiert werden.

4. Verfahren nach Anspruch 3, **dadurch gekennzeichnet, dass** die Steuersignale eine Fahrzeugbremse, eine Kraftstoffzufuhreinrichtung des Fahrzeugs zum Antriebsaggregat desselben, eine Lenkungseinrichtung und/oder eine Fahrzeuggeschwindigkeitskontrolleinrichtung ansteuern.

5. Vorrichtung zur Verkehrszeichenerkennung und zur Navigation eines Fahrzeugs, mit einer Verkehrszeichenerkennungseinrichtung zum Bereitstellen von Verkehrszeichenerkennungsdaten, mit einer Navigationseinrichtung zum Bereitstellen von Navigationsdaten vorgesehen ist, wobei die Verkehrszeichenerkennungseinrichtung und die Navigationseinrichtung über mindestens eine Datenaustauschleitung (1) miteinander verbunden sind, so dass ein Datenaustausch zwischen den beiden Einrichtungen durchführbar ist, mit einer Vergleichseinrichtung für Verkehrszeichenerkennungsdaten mit Navigationsdaten und mit videobasierten Einrichtungen, Lasereinrichtungen oder funkbasierten Einrichtungen zur Verkehrszeichenerkennung, wenn in den Verkehrszeichen verkehrszeichenspezifische Sender eingebaut sind, die von der Verkehrszeichenerkennungseinrichtung des Fahrzeugs empfangbar sind, und mit einer Auswerteeinheit, die dazu ausgebildet ist aus den Verkehrszeichenerkennungsdaten und den Navigationsdaten eine aktuell gültige Geschwindigkeitsbeschränkung zu ermitteln.

6. Vorrichtung nach Anspruch 5, **dadurch gekennzeichnet, dass** über die Datenaustauschleitung Verkehrszeichenerkennungsdaten an die Navigationseinrichtung übertragbar sind.

7. Vorrichtung nach Anspruch 6, **dadurch gekennzeichnet, dass** die Navigationseinrichtung einen Speicher aufweist zur Speicherung von Verkehrszeichenerkennungsdaten im Falle erkannter Verkehrszeichen.

8. Vorrichtung nach Anspruch 6 oder 7, **dadurch gekennzeichnet, dass** die Navigationseinrichtung einen Kartenspeicher zur Abspeicherung insbesondere von Kartendaten digitaler Straßenkarten sowie Vergleichsmittel zum Vergleich der Verkehrszeichenerkennungsdaten mit den Kartendaten aufweist, so dass bei Abweichungen ein Warnhinweis an einen Fahrzeugführer erbringbar ist.

9. Vorrichtung nach Anspruch 5, **dadurch gekennzeichnet, dass** der Datenaustausch eine Übermittlung einer aktuellen Straßenform und wahlweise weiterer Informationen, wie beispielsweise Anzahl der Fahrspuren, Breite der Fahrbahn, das Verlassen oder das Eintreten in eine Ortschaft, Gefahren wie zum Beispiel eine scharfe Kurve in großer Entfernung, implizite Aufhebung der Gültigkeit von Verkehrszeichen infolge Straßenwechsels, Existenz zur aktuellen Straße benachbarter Straßen, Auf- und Abbiegespuren, Beschleunigungsstreifen, kreuzender Fahrbahnen, Kreuzungen, Brücken sowie Fuß- und Fahrradwege, von der Navigationseinrichtung an die Verkehrszeichenerkennungseinrichtung umfasst.

10. Vorrichtung nach einem der Ansprüche 5 bis 9, **dadurch gekennzeichnet, dass** die Auswerteeinheit (7) vorgesehen ist, wobei die Auswerteeinheit mit der Verkehrszeichenerkennungseinrichtung und/oder der Navigationseinrichtung (3) über weitere Datenleitungen (14; 15) verbunden ist zum Datenaustausch mit der jeweiligen Einrichtung, wobei die Auswerteeinheit Fahrerinformationen aus den Navigationsdaten und den Verkehrszeichenerkennungsdaten bereitstellt.

11. Vorrichtung nach Anspruch 10, **dadurch gekennzeichnet, dass** die Auswerteeinheit aus den Verkehrszeichenerkennungsdaten und/oder den Navigationsdaten Steuersignale generiert zum Eingriff in eine Fahrzeugsteuerung.

12. Vorrichtung nach Anspruch 11, **dadurch gekennzeichnet, dass** die Steuersignale Signale für eine Fahrzeugbremse und/oder für ein elektronisches Gaspedal und/oder für eine Lenkwinkelsteuerung und/oder für eine Tempomatansteuerung umfassen.

13. Verkehrszeichenerkennungseinrichtung zum Bereitstellen von Verkehrszeichenerkennungsdaten, **dadurch gekennzeichnet, dass** zur Verwendung in einer Vorrichtung nach einem der Ansprüche 5 bis 12 die Einrichtung über mindestens eine Datenaustauschleitung (1) mit einer Navigationseinrichtung (3) zum Bereitstellen von Navigationsdaten verbindbar ist, so daß ein Datenaustausch mit der Navigationseinrichtung (3) durchführbar ist.

14. Navigationseinrichtung zum Bereitstellen von Navigationsdaten zur Fahrer- bzw. Fahrzeugführung, **dadurch gekennzeichnet, dass** die Navigationseinrichtung zur Verwendung in einer Vorrichtung nach einem der Ansprüche 5 bis 13 über mindestens eine Datenaustauschleitung (1) mit einer Verkehrszeichenerkennungseinrichtung (2) zum Bereitstellen von Verkehrszeichenerkennungsdaten verbindbar ist, so dass ein Datenaustausch mit der Verkehrszeichenerkennungseinrichtung durchführbar ist.

## Claims

1. Method for recognizing traffic signs in the surroundings of a vehicle and for navigating the vehicle, in which
• traffic sign recognition data is generated when traffic signs are recognized,
• navigation data being made available for determining the location of the vehicle, in particular by means of a satellite-based locating method,
∘ locating method, the navigation data being conditioned
• in the vehicle in order to
▪ update and/or supplement it with the traffic sign recognition data, and/or
▪ the traffic sign recognition data being conditioned in order to supplement it with the navigation data,
∘ the traffic sign recognition data being compared with the navigation data, and
• when there is a deviation,
∘ a warning message is output to the driver of the vehicle, and/or
∘ the navigation data or the traffic sign recognition data is updated, a currently valid speed restriction being determined from the traffic sign recognition data and the navigation data,
• a video-based principle, a laser scan principle or a radio-based method being used for the traffic sign recognition if traffic-sign-specific transmitters which can be received by the traffic sign recognition device of the vehicle are installed in the traffic signs.

2. Method according to Claim 1, **characterized in that** the navigation data comprises supplementary data, such as for example the current form of the road, the number of lanes, the width of the lane, whether a locatity is exited or entered, hazard warnings such as, for example, a sharp bend at a large distance, implicit cancellation of the validity of traffic signs owing to a road changing, the existence of roads adjacent to the current road, entry and exit lanes, acceleration slip ways, intersecting carriageways, intersections, bridges and footpaths and cycle lanes, **in that** the traffic sign recognition data is conditioned using the supplementary data in such a way that recognized traffic signs are signalled to the driver of the vehicle only within the scope of the current traffic situation.

3. Method according to one of the preceding claims, **characterized in that** control signals for intervention in a vehicle control system are generated from the navigation data and/or the traffic sign recognition data.

4. Method according to Claim 3, **characterized in that** the control signals actuate a vehicle brake, a fuel supply device of the vehicle to its drive unit, a steering device and/or a vehicle speed monitoring device.

5. Device for recognizing traffic signs and for navigating a vehicle, is provided with a traffic sign recognition device for making available traffic sign recognition data, and with a navigation device for making available navigation data, the traffic sign recognition device and the navigation device being connected to one another via at least one data exchange line (1) so that data can be exchanged between the two devices, having a comparator device for traffic sign recognition data with navigation data and having video-based devices, laser devices or radio-based devices for traffic sign recognition if traffic-sign-specific transmitters which can be received by the traffic sign recognition device of the vehicle are installed in the traffic signs, and having an evaluation unit which is designed to determine a currently valid speed restriction from the traffic sign recognition data and the navigation data.

6. Device according to Claim 5, **characterized in that** traffic sign recognition data can be transmitted to the navigation device via the data exchange line.

7. Device according to Claim 6, **characterized in that** the navigation device has a memory for storing traffic sign recognition data if traffic signs are detected.

8. Device according to Claim 6 or 7, **characterized in that** the navigation device has a card memory for storing, in particular, card data of digital road maps and comparator means for comparing the traffic sign recognition data with the card data so that when there are deviations a warning message to a driver of a vehicle can be produced.

9. Device according to Claim 5, **characterized in that** the data exchange comprises transmission of a current form of the road and optionally further information such as, for example, number of lanes, width of the lane, whether a locality is exited or entered, hazards such as, for example, a sharp bend at a large distance, implicit cancellation of the validity of traffic signs owing to a road changing, the existence of roads adjacent to the current road, entry and exit lanes, acceleration slip ways, intersecting carriageways, intersections, bridges and footpaths and cycle lanes, from the navigation device to the traffic sign recognition device.

10. Device according to one of Claims 5 to 9, **characterized in that** the evaluation unit (7) is provided, the evaluation unit being connected to the traffic sign recognition device and/or the navigation device (3) via further data lines (14; 15) in order to exchange data with the device in question, the evaluation unit making available driver information from the navigation data and the traffic sign recognition data.

11. Device according to Claim 10, **characterized in that**, from the traffic sign recognition data and/or the navigation data, the evaluation unit generates control signals for intervention in a vehicle control system.

12. Device according to Claim 11, **characterized in that** the control signals comprise signals for a vehicle brake and/or for an electronic accelerator pedal and/or for a steering angle control system and/or for a cruise control system.

13. Traffic sign recognition device for making available traffic sign recognition data, **characterized in that**, for use in a device according to one of Claims 5 to 12, the device can be connected via at least one data exchange line (1) to a navigation device (3) for making available navigation data so that data can be exchanged with the navigation device (3).

14. Navigation device for making available navigation data for driver prompting or vehicle control, **characterized in that**, for use in a device according to one of Claims 5 to 13, the navigation device can be connected via at least one data exchange line (1) to a traffic sign recognition device (2) for making available traffic sign recognition data so that data can be exchanged with the traffic sign recognition device.

## Revendications

1. Procédé destiné à la reconnaissance de signaux routiers aux alentours d'un véhicule et à la navigation du véhicule, selon lequel
▪ des données de reconnaissance de signaux routiers sont produites en cas de reconnaissance de signaux routiers,
▪ des données de navigation destinées à localiser le véhicule étant en particulier fournies par un procédé de repérage par satellite, dans le véhicule
- les données de navigation pour
▪ l'actualisation et/ou
▪ le complément
▪ étant préparées avec les données de reconnaissance de signaux routiers, et/ou
▪ les données de reconnaissance de signaux routiers sont préparées pour être complétées avec les données de navigation,
▪ les données de reconnaissance de signaux routiers étant comparées avec les données de navigation, et
▪ en cas de discordance un signal d'avertissement étant donné au conducteur et/ou
▪ les données de navigation ou les données de reconnaissance de signaux routiers étant actualisées, une limitation de la vitesse actuellement valable étant déterminée, à partir des données de reconnaissance de signaux routiers et des données de navigation,
- pour la reconnaissance des signaux routiers étant utilisé un principe vidéo, un principe de balayage par laser ou un procédé radio lorsque des émetteurs que l'installation de reconnaissance de signaux routiers du véhicule peut recevoir sont intégrés dans les signaux routiers.

2. Procédé selon la revendication 1, **caractérisé en ce que** les données de navigation comprennent des données de complément comme par exemple le type de la route suivie, le nombre des voies de circulation, la largeur de la chaussée, l'entrée ou la sortie dans une agglomération, des annonces de dangers comme par exemple un virage prononcé à grande distance, une annulation implicite de la validité des signaux routiers du fait qu'on a changé de route, l'existence de routes voisines de la route suivie, des couloirs de sélection, des bandes d'accélération, des chaussées qui se croisent, des croisements, des ponts ainsi que des voies pour piétons et pour bicyclettes, **en ce que** les données de reconnaissance de signaux routiers sont préparées en utilisant les données de complément, de sorte que les signaux routiers reconnus ne sont transmis au conducteur du véhicule que dans le cadre de la situation actuelle de circulation.

3. Procédé selon l'une des revendications précédentes, **caractérisé en ce que** l'on génère à partir des données de reconnaissance de signaux routiers et/ou des données de navigation des signaux de commande pour intervenir dans une commande de véhicule.

4. Procédé selon la revendication 3, **caractérisé en ce que** les signaux de commande mettent en oeuvre un frein de véhicule, une installation d'alimentation en carburant du véhicule jusqu'à un groupe d'entraînement de celui-ci, une installation de direction et/ou une installation de contrôle de la vitesse du véhicule.

5. Dispositif destiné à la reconnaissance de signaux routiers et à la navigation d'un véhicule, avec une installation de reconnaissance de signaux routiers pour fournir des données de reconnaissance de signaux routiers, avec une installation de navigation pour fournir des données de navigation, l'installation de à reconnaîsine de signaux routiers et l'installation de navigation étant liées l'une à l'autre par au moins une ligne d'échange de données (1) de sorte qu'on peut réaliser un échange des données entre les deux installations, avec une installation de comparaison des données de reconnaissance de signaux routiers avec les données de navigation, et avec des installations vidéo, des installations laser ou des installations radio destinées à la reconnaissance des signaux routiers lorsque des émetteurs, spécifiques aux signaux routiers et qui peuvent être reçus par l'installation de reconnaissance de signaux routiers du véhicule, sont intégrés dans les signaux routiers et avec une unité d'interprétation qui est conçue pour déterminer une limitation actuelle de la vitesse à partir des données de reconnaissance de signaux routiers et des données de navigation.

6. Dispositif selon la revendication 5, **caractérisé en ce que** des données de reconnaissance de signaux routiers peuvent être transmises à l'installation de navigation au moyen de la conduite d'échange de données.

7. Dispositif selon la revendication 6, **caractérisé en ce que** l'installation de navigation présente une mémoire pour enregistrer des données de reconnaissance de signaux routiers au cas où des signaux routiers sont reconnus.

8. Dispositif selon la revendication 6 ou 7, **caractérisé en ce que** l'installation de navigation présente une mémoire cartographique pour enregistrer en particulier des données cartographiques de cartes routières numériques ainsi que des moyens de comparaison destinés à comparer les données de reconnaissance de signaux routiers avec les données de cartes, de sorte qu'on peut donner au conducteur du véhicule des avertissements en cas de divergences.

9. Dispositif selon la revendication 5, **caractérisé en ce que** l'échange de données allant de l'installation de navigation à l'installation de reconnaissance de signaux routiers comprend une transmission d'un type de route suivie et facultativement d'autres informations comme par exemple le nombre des voies de circulation, la largeur de la chaussée, l'entrée ou la sortie dans une localité, des dangers comme par exemple un virage prononcé à grande distance, une annulation implicite de la validité de signaux routiers du fait qu'on a changé de route, l'existence de routes voisines de la route suivie, des couloirs de sélection, des bandes d'accélération, des chaussées qui se croisent, des croisements, des ponts ainsi que des voies pour piétons ou pour bicyclettes.

10. Dispositif selon l'une des revendications 5 à 9, **caractérisé en ce qu'** on prévoit une unité d'interprétation (7), l'unité d'interprétation étant liée à l'installation de reconnaissance de signaux routiers et/ou à l'installation de navigation (3) au moyen d'autres lignes de données (14 ; 15) afin d'échanger les données avec l'installation concernée, l'unité d'interprétation fournissant les informations pour le conducteur provenant des données de navigation et des données de reconnaissance de signaux routiers.

11. Dispositif selon la revendication 10, **caractérisé en ce que** l'unité d'interprétation génère des signaux de commande pour intervenir dans une commande de véhicule à partir des données de reconnaissance de signaux routiers et/ou des données de navigation.

12. Dispositif selon la revendication 11, **caractérisé en ce que** les signaux de commande comprennent des signaux pour un frein de véhicule et/ou pour un accélérateur électronique et/ou pour une commande d'angle de braquage et/ou pour une commande automatique de la vitesse.

13. Installation de reconnaissance de signaux routiers destinée à fournir des données de reconnaissance de signaux routiers, **caractérisée en ce que** pour l'utiliser dans un dispositif selon l'une des revendications 5 à 12, l'installation peut être reliée à l'installation de navigation (3) destinée à fournir des données de navigation au moyen d'au moins une ligne d'échange de données (1), de sorte qu'un échange des données avec l'installation de navigation (3) est possible.

14. Installation de navigation destinée à fournir des données de navigation pour guider le conducteur ou le véhicule, **caractérisée en ce que** l'installation de navigation, pour l'utiliser dans un dispositif selon l'une des revendications 5 à 13, peut être reliée à une installation de reconnaissance de signaux routiers (2) pour fournir des données de reconnaissance de signaux routiers par l'intermédiaire d'au moins une ligne d'échange de données (1), de sorte qu'un échange des données avec l'installation de reconnaissance de signaux routiers est possible.
